Europäisches Patentamt

European Patent Office

Office européen des brevets

(19)

(11) Veröffentlichungsnummer: **0 208 127**
**B1**

(12) **EUROPÄISCHE PATENTSCHRIFT**

(45) Veröffentlichungstag der Patentschrift: **25.07.90**

(21) Anmeldenummer: **86107376.5**

(22) Anmeldetag: **30.05.86**

(51) Int. Cl.⁵: **A 47 C 1/024, B 64 D 11/06**

(54) Vorrichtung zum Einstellen insbesondere der Neigung der Rückenlehne eines Sitzes.

(30) Priorität: **10.07.85 DE 3524602**

(43) Veröffentlichungstag der Anmeldung:
**14.01.87 Patentblatt 87/03**

(45) Bekanntmachung des Hinweises auf die
Patenterteilung:
**25.07.90 Patentblatt 90/30**

(84) Benannte Vertragsstaaten:
**FR GB IT**

(56) Entgegenhaltungen:
**GB-A-2 004 975**
**US-A-4 354 398**

(73) Patentinhaber: **Selzer, Günther, Ing. (grad.)**
**Gartenstrasse 9**
**D-5603 Wülfrath (DE)**

(72) Erfinder: **Selzer, Günther, Ing. (grad.)**
**Gartenstrasse 9**
**D-5603 Wülfrath (DE)**

(74) Vertreter: **König, Reimar, Dr.-Ing. et al**
**Patentanwälte Dr.-Ing. Reimar König Dipl.-Ing.**
**Klaus Bergen Wilhelm-Tell-Strasse 14 Postfach**
**260162**
**D-4000 Düsseldorf 1 (DE)**

## Beschreibung

Die Erfindung betrifft eine Vorrichtung zum Verstellen und Blockieren insbesondere der Neigung einer Rückenlehne, beispielsweise eines Flugzeug- oder Eisenbahnsitzes, mittels einer beim Drücken eines Knopfes über einen in einer Armlehne des Sitzes angeordneten Seilzug-Auslöser beaufschlagten Kolben-Zylinder-Einheit, und einer Kraftumlenkung über einen vom Druckknopf beaufschlagten Hebel sowie einer Übersetzung der Auslösekraft außerhalb der Armlehne über einen an der Kolbenstange der Kolben-Zylinder-Einheit angreifenden, mit dem Hebel des Druckknopfes durch den Seilzug verbundenen Auslösehebel.

Eine solche Vorrichtung ist durch die US—Patentschrift 4 354 398 bekanntgeworden. Eine wie dort verwendete hydraulische Kolben-Zylinder-Einheit erlaubt es in Verbindung mit mechanischen Federn, die die entlastete Rückenlehne in ihre Ausgangsstellung zurückstellen, die eingestellte Neigung der Rückenlehne des Sitzes zu blockieren. Hierbei steht ein in der Armlehne des Sitzes angeordneter Druckknopf über einen Bowdenzug mit dem für eine Übersetzung der Auslösekraft sorgenden Auslösehebel in Verbindung, der beim Eindrücken des in der Armlehne des Sitzes montierten Druckknopfes die auslösende Kolbenstange der hydraulischen Kolben-Zylinder-Einheit beaufschlagt. Hierdurch wird die Blockierung der Zylinder-Einheit aufgehoben und die Kolbenstange gegen die Kraft der Federn verschoben. Beim Loslassen des Druckknopfes blockiert die Kolben-Zylinder-Einheit jede weitere Bewegung.

Auf diese Weise läßt sich ein Rücksitz in einem vorgegebenen Bereich von meistens bis 28° Neigung verstellen und beliebig arretieren.

Die hydraulische Kolben-Zylinder-Einheit ist zusammen mit dem häufig sehr komplizierten und anfälligen Federsystem sehr aufwendig. Trotz des großen und mit nicht unerheblichen Kosten verbundenen Aufwandes beim Einsatz dieser Verstellvorrichtungen werden ausschließlich hydraulische Kolben-Zylinder-Einheiten verwendet. Bei dieser Kombination ist die Auslösekraft am Druckknopf nur gering, sie überschreitet 20 N bis 30 N nicht. Damit ist ein Bedienen auch durch Kinder möglich. Außerdem muß der Auslösemechanismus in die begrenzten Abmessungen von ca. 40 mm Breite der Armlehne mit weiterem Zubehör wie Ascher, Rufknopf, Lichtschalter etc. eingebaut werden können.

Ausgehend davon, daß einerseits eine ausreichende Rückstellkraft der Federung erforderlich ist und damit die erforderliche Kraft an der Kolbenstange zum Auslösen der Verstellbewegung zwangsläufig entsprechend hoch ist, liegt der Erfindung die Aufgabe zugrunde, eine Verstellvorrichtung zu schaffen, die ohne eine hydraulische Kolben-Zylinder-Einheit und ohne mechanische Federn auskommt, dabei die zulässigen Auslösekräfte am Druckknopf nicht überschreitet und sich nachträglich ohne weitere Änderungen in vorhandene Sitze einbauen läßt.

Diese Aufgabe wird erfindungsgemäß durch eine Gasdruckfeder mit starrer Blockierung und eine Übersetzung des Seilzug-Auslösers in der Armlehne über den außerhalb seiner Mitte die Auslösekraft in den Hebel einleitenden Druckknopf gelöst. Damit ergibt sich eine geteilte Übersetzung zum Übertragen der Auslösekraft, nämlich neben der Übersetzung über den außerhalb des Sitzes an der Kolbenstange des Gasdruckzylinders angreifenden, mit dem Hebel des Druckknopfes in der Armlehne durch einen Seilzug verbundenen Auslösehebel zusätzlich noch die erfindungsgemäße Übersetzung in der Armlehne, und zwar über den außerhalb seiner Mitte die Auslösekraft in den Hebel einleitenden Druckknopf. Durch diese zusätzliche Übersetzung sogleich an dem vom Druckknopf in der Armlehne betätigten Hebel läßt sich bei derartigen, an sich bekannten und in den verschiedensten Ausführungen und Größen im Handel erhältlichen Gasdruckfedern, die von der erforderlichen Rückstellkraft, d.h. die Kraft, die die Rückenlehne in ihre Ausgangsstellung bringt, unmittelbar abhängige erforderliche Auslösekraft an der Kolbenstange der Gasdruckfeder und damit die Auslösekraft am Druckknopf in der Armlehne herabsetzen. Die geteilte Übersetzung erlaubt es, daß sich einerseits die für eine Gasdruckfeder erforderliche hohe Auslösekraft auf den am Druckknopf gewünscht niedrigen Bereich verringern und andererseits der Auslösemechanismus ohne Dimensionsänderung des Sitzes in die begrenzten Abmessungen der Armlehne einbauen läßt.

Das Hebelverhältnis am Druckknopf kann 2:1 und an der Gasdruckfeder 4:1 betragen. Infolge insbesondere der ersten Übersetzung bereits unmittelbar beim Eindrücken und Einleiten des außermittigen Kraftangriffs über den Druckknopf und der zweiten Übersetzung an der Gasdruckfeder, wird selbst bei einer hohen Auslösekraft zum Verstellen der Kolbenstange der Kraftaufwand am Druckknopf in der Armlehne durch Auswahl des günstigsten Hebelverhältnisses im gewünschten Bereich gehalten. Dabei läßt sich die Länge des an der Kolbenstange der Gasdruckfeder angreifenden Hebels so weit reduzieren, daß sich dieser in dem vorgegebenen begrenzten Raum des Sitzes unterbringen läßt. Vor allem wird durch die erste Übersetzung am Auslöseknopf von 2:1 die Einbautiefe in den begrenzten Abmessungen der Armlehne erheblich reduziert. Beispielsweise muß eine für Standardsitze verwendbare Gasdruckfeder eine Rückstellkraft von ca. 350 N haben. Die erforderliche Auslösekraft an der Kolbenstange beträgt dann ca. 130 N. Die gewünschten Auslösekräfte am Druckknopf in der Armlehne sollten bei einem Auslöseweg von zehn Millimetern 20 N bis 30 N nicht überschreiten und vorzugsweise lediglich 15 N betragen. Dies läßt sich bei zwei Übersetzungen mit einem Übersetzungsverhältnis der Hebel von ca. 1:8 erreichen, wobei sich das gesamte Übersetzungsverhältnis durch das außermittige Einleiten der Kraft über die erste Übersetzung am Druckknopf im Verhältnis von 2:1 bereits um die Hälfte reduzieren läßt. Je nach Auslegung der Hebel in der Armlehne, kann die Auslösekraft allein durch die Übersetzung am Druckknopf soweit herabgesetzt werden, daß das angestrebte leichte Bedienen möglich ist.

Der Druckknopf greift vorteilhaft mit einander diametral gegenüberliegenden vorspringenden Führungsnocken in Schlittze einer zylindrischen Abdeckhülse ein. Die Führungsnocken werden von innenwandig angeordneten Ausnehmungen einer die Hülse zumindest im Bereich der Schlitze umschließenden Manschette aufgenommen. Damit läßt sich trotz der außermittigen Beaufschlagung des Hebels der Druckknopf beim Einpressen verkantungsfrei und linear gleichmäßig bewegen.

Das trotz des außermittigen Kraftangriffs verkantungsfreie und linear gleichmäßige des Druckknopfes läßt sich alternativ auch mit einer Manschette erreichen, die einen Gewindeansatz aufweist und, vorzugsweise unter Zwischenschaltung einer Feder, mit der Abdeckhülse verschraubbar ist. Das hat den Vorteil einer einfacheren Bauweise der Abdeckhülse, da der Druckknopf nur noch in der Manschette geführt wird. Mit der zwischengeschalteten Feder lassen sich Bauunterschiede bzw. Herstellungstoleranzen ausgleichen.

Zum Ausgleich von montage- und herstellungsbedingten Einbauspielen kann der Auslösehebel am Druckpunkt mit der Kolbenstange der Gasdruckfeder eine Stellschraube aufweisen. Den Ausgleich von Einbauspielen unterstützt vorteilhaft weiterhin ein Bowdenzug als Seilverbindung der Hebel, da sich eine Verlängerung bzw. Kürzung des Seiles über die an dem Ende des Bowdenzuges angeordnete Verstellschraube erreichen läßt.

Der Auslösehebel eines über einen Basisarm mit der Kolbenstange der Gasdruckfeder verschraubten Hebelgestänges kann einen feststehenden Bolzen und der Basisarm kann in einer Bohrung für den Bowdenzug eine federbelastete Stellmutter aufweisen. In diesem Fall lassen sich Einbauspiele bzw. Längenunterssschiede von Hand mit der Stellmutter ausgleichen; die auf die Mutter und damit auf den Basisarm wirkende Feder unterstützt das Zurückstellen der Gasfeder.

Eine auf der Kolbenstange festlegbare Hubbegrenzungshülse kann mit Abstand voneinander angeordnete Radialschlitze für eine darin einrastende Scheibe aufweisen. Damit läßt sich innerhalb des maximalen Kolbenhubs der Gasdruckfeder und damit innerhalb des Bereichs der maximal möglichen Neigung der Rückenlehne, von vornherein eine definierte Begrenzung der Verstellung erreichen; der Kolbenstangenweg läßt sich durch die in die Schlitze eingesetzte, den Verstellweg der Kolbenstange begrenzende Scheibe variieren.

Anstelle der ständig über die Gasdruckfeder geschobenen Hülse lassen sich in den Fällen, in denen eine Hubbegrenzung gewünscht wird, auf der Kolbenstange koaxial festlegbare Hubbegrenzungsscheiben mit Haltering anbringen. Mit den bedarfsweise aufzusetzenden Scheiben kann insbesondere das Gewicht der Gasdruckfedern reduziert werden; insbesondere im Flugzeugbetrieb sind Gewichtsersparnisse von großer Bedeutung.

Ein Gewindestift an der der Kolbenstange abgewandten Seite der Gasdruckfeder ermöglicht den Einbau in unterschiedliche Personensitze, da sich ein Anschluß, z.B. ein Gabelkopf, je nach den Einbauverhältnissen mehr oder weniger weit auf die hintere Kolbenstange schrauben läßt. Hierdurch können die Gasfedern gleichzeitig auf verschiedene Längen eingestellt und der Platzbedarf beim Einbau reguliert bzw. reduziert werden.

Die Erfindung wird nachfolgend anhand eines in der Zeichnung dargestellten Ausführungsbeispiels des näheren erläutert. In der Zeichnung zeigen:

Fig. 1 die Seitenansicht einer Vorrichtung zum Auslösen des Verstellens und Blockierens der Neigung einer nicht dargestellten Rückenlehne;

Fig. 2 eine Explosions-Darstellung des Auslösers gemäß Fig. 1;

Fig. 3 eine perspektivische Ansicht einer Gasdruckfeder und Explosions-Darstellungen von Zusatz- bzw. Hilfselementen auf der Kolbenstange bzw. dem Gewindestift der Gasdruckfeder;

Fig. 4 eine Explosions-Darstellung einer zweiten Ausführung eines Auslösers; und

Fig. 5 eine perspektivische Ansicht einer Gasdruckfeder une eine Explosions-Darstellung einer auf der Gasdruckfeder befestigbaren Hubbegrenzungsscheibe.

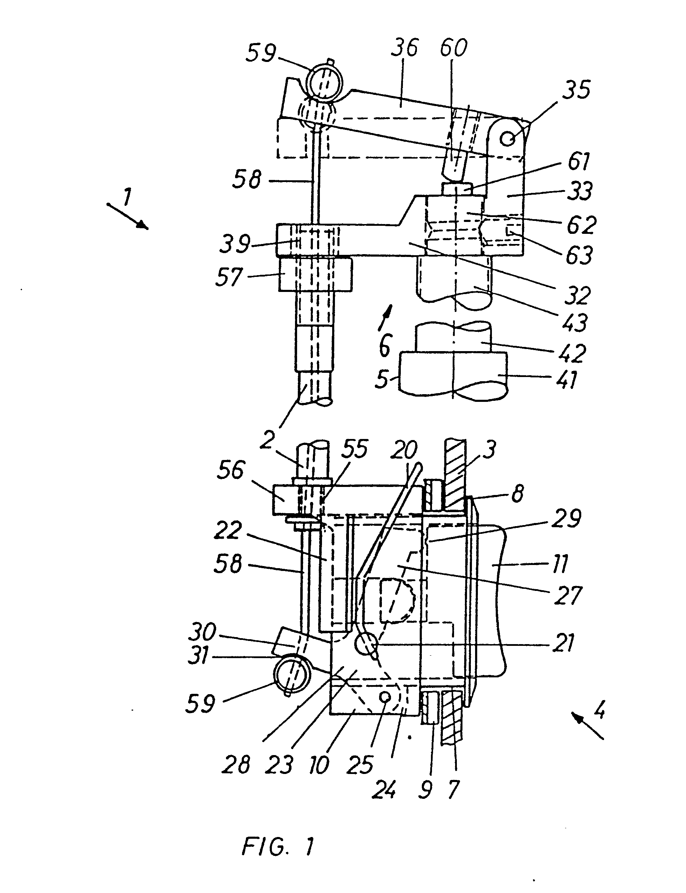

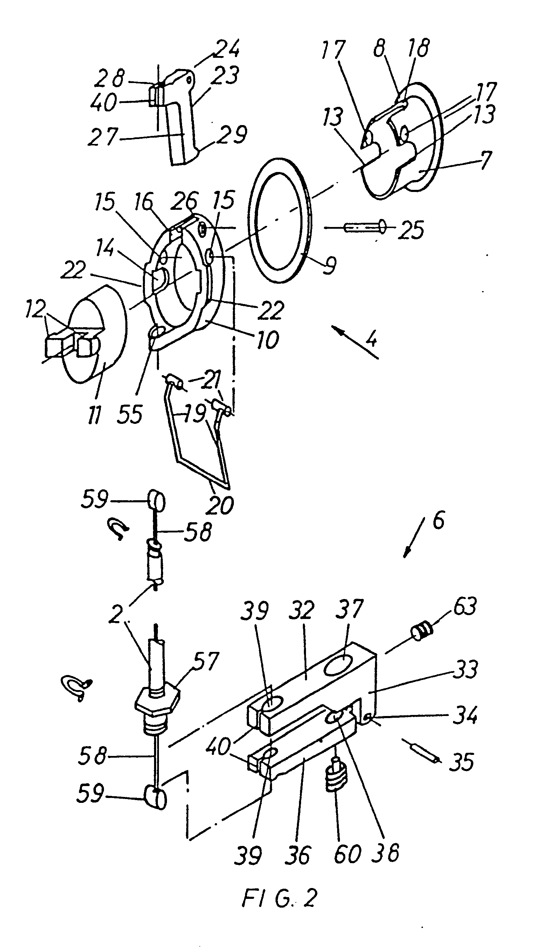

Eine Vorrichtung 1 zum Einstellen und Blockieren der Neigung der Rückenlehne eines nicht dargestellten Sitzes besteht aus zwei durch einen Bowdenzug 2 miteinander verbundenen und in einer schematisch dargestellten Armlehne 3 und eines nicht dargestellten Sitzrahmens des Sitzes angeordneten Teilen, nämlich einem Auslöserkopf 4 und einem eine Gasdruckfeder 5 beaufschlagenden Hebelgestänge 6. Wie in Fig. 2 dargestellt, besteht der Auslöserkopf 4 aus einer zylindrischen Abdeckhülse 7, die sich beim Einbau mit einem Kragen 8 von außen gegen die Armlehne 3 legt (Fig. 1), einer von der Innenseite der Wand der Armlehne 3 anliegenden Federscheibe 9, einer der Hülse 7 umschließenden Manschette 10 sowie einem Druckknopf 11, der mittels einander diametral gegenüberliegenden Führungsnocken 12 in Axialschlitze 13 der Hülse 7 eingreift.

Die Führungsnocken 12 ragen bis in mit den Schlitzen 13 deckungsgleiche innenwandige Ausnehmungen 14 der die Hülse 7 umschließenden Manschette 10, was ein verkantungsfreies Führen beim Eindrücken des Druckknopfes 11 gewährleistet und ein Herausgleiten nach vorn verhindert. In der Manschette 10 befinden sich weiterhin zwei einander fluchtend gegenüberliegende Bohrungen 15 sowie eine axiale Längsnut 16, denen Bohrungen 17 und eine axiale Längsnut 18 der Manschette 10 lagegenau zugeordnet sind. An den oberen Enden von Schenkeln 19 einer U-förmigen Feder 20 sind nach innen weisende Bolzen 21 angeordnet; diese sind in die Bohrungen 15 bzw. 17 sowohl der Manschette 10 als auch der Hülse 7 eingerastet.

Die gespannte Feder 20 (Fig. 1) sichert die Einbaulage des Auslöserkopfes 4 im nach dem Einbau nicht mehr zugänglichen Inneren der Armlehne 3; Teilabschnitte der Federschenkel erstrecken sich dabei mit geringem Abstand von stegartigen Außenvorsprüngen 22 am oberen Rand der Manschette 10. Vor Montagebeginn bzw. Demontagen wird der Federbügel 20 parallel zum Seilzug 2 gedrückt, dabei gleiten die Bügel auf die Vorsprünge 22 auf und eintriegeln die Manschette 10 und Hülse 7.

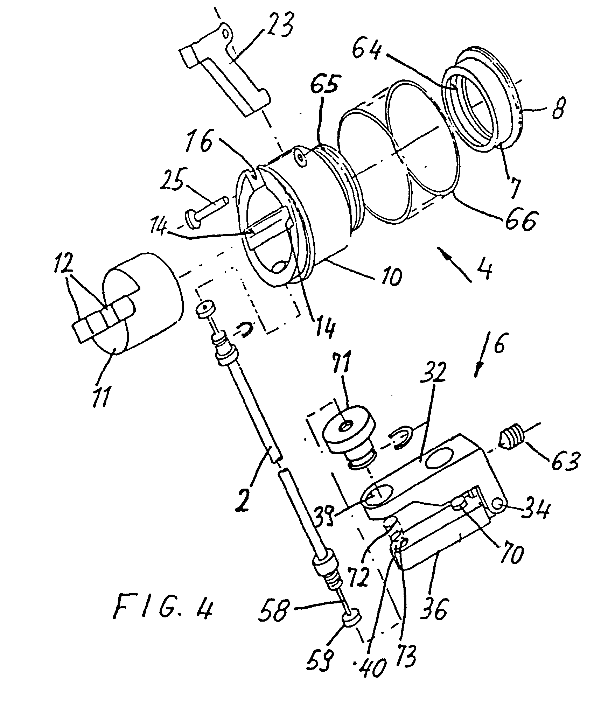

Bei der in Fig. 4 dargestellten Ausführung des Auslöserkopfes 4 weist die Abdeckhülse 7 ein Innengewinde 64 und die Manschette 10 einen Gewindezapfen 65 auf; ein Zusammenfügen der Teile 7, 10 läßt sich durch einfaches Aufschrauben der Hülse 7 auf den Gewindezapfen 65 erreichen. Eine zwischengeschaltete, auf den Gewindeansatz 65 geschobene Feder 66 gleicht Bauunterschiede aus. Ein die Einbaulage des Auslöserkopfes 4 in der Armlehne sicherndes Element, beispielsweise die Feder 20 gemäß Fig. 1 und 2, ist hierbei nicht mehr erforderlich, da der Halt in der Armlehne 3 durch die Schraubverbindung gewährleistet ist.

Ein zweiarmiger Hebel 23 ist mit einem Lagerflansch 24 schwenkbeweglich in der Längsnut 16 gelagert, der gleichzeitig von der axialen Längsnut 18 der Hülse 7 aufgenommen wird. Der Hebel 23 ist durch einen Stift 25 gesichert, der quer zur Nut 16 angeordnete Bohrungen 26 durchdringt. Die beiden anderen, unterschiedlich langen Arme 27, 28 verlaufen etwa im rechten Winkel zueinander; der längere Arm 27 überbrückt—ausgehend vom Lagerpunkt, d.h. dem Stift 25—nahezu den gesamten Innendurchmesser der Manschette 10 und ist etwa doppelt so lang wie der andere, in Axialrichtung gegenüber der Manschette 10 vorkragende Arm 28. Der Arm 27 weist am äußeren Ende eine Nase 29 und der Hebel 28 einen in eine Bohrung 30 übergehenden Längsschlitz sowie eine schalenartige Vertiefung 31 auf.

Das an der am Sitzrahmen montierten Gasfeder im Abstand vom Auslöserkopf 4 angeordnete Hebelgestänge 6 besteht aus einem starren Basisarm 32 mit einem Vertikalsteg 33, an dessen oberen Ende mittels eines durch eine Querbohrung 34 des Vertikalsteges 33 gesteckten Stiftes 35 ein Auslösearm 36 gelagert ist. Der Basisarm 32 besitzt eine parallel zum Steg 33 verlaufende Bohrung 37 und der Auslösearm 36 eine mit der Bohrung 37 fluchtende Gewindebohrung 38. Beide Arme 32, 36 weisen an den vorderen Stirnseiten in Bohrungen 39 übergehende Längsschlitze 40 auf.

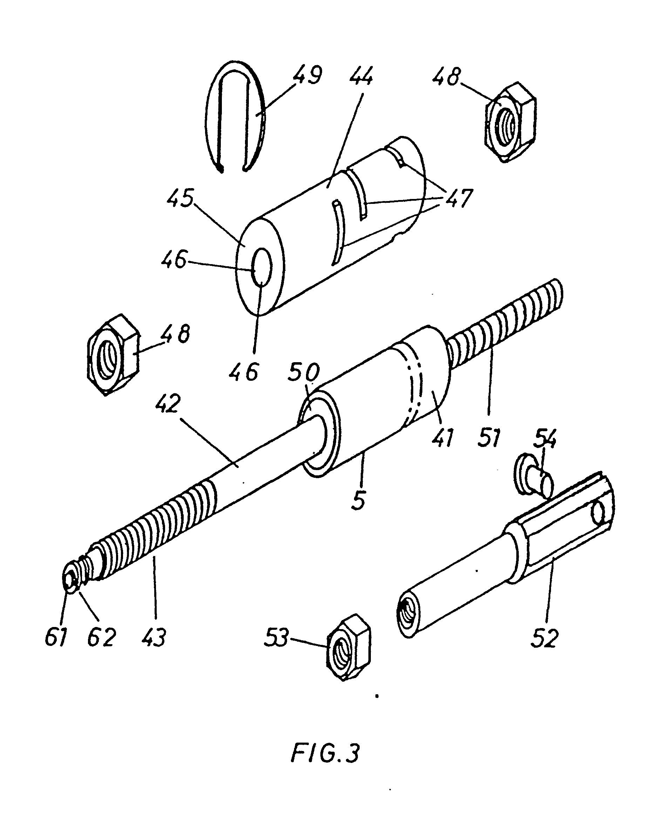

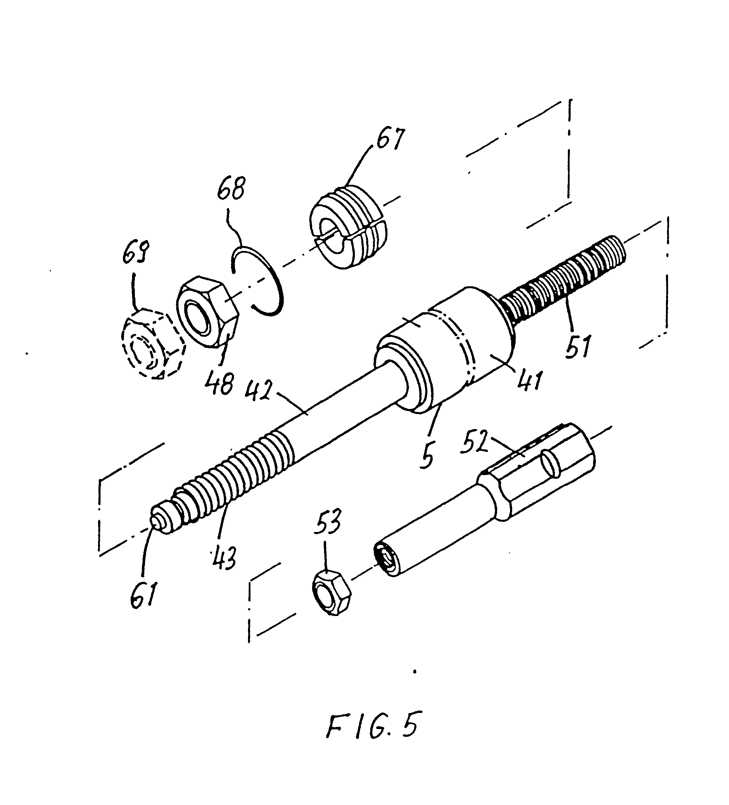

Eine in einem Zylinder 41 der in Fig. 3 dargestellten Gasdruckfeder 5 geführte Kolbenstange 42 weist einen vorderen Gewindeabschnitt 43 auf und kann mit einer Hubbegrenzungshülse 44 versehen sein. Die zylindrische Hülse 44 ist an einer Seite offen und an der anderen Seite durch einen Boden 45 mit einer Bohrung 46 zum Hindurchführen der Kolbenstange 42 sowie mit im Abstand voneinander angeordneten Radialschlitzen 47 versehen. Die Hülse 44 wird über die Kolbenstange 42 geschoben und mittels Muttern 48 und dem nicht dargestellten Sitzanschluß festgelegt, die den Boden 45 zwischen sich einschließen. Es läßt sich dann der Maximalhub der Kolbenstange 42 beliebig begrenzen, je nachdem in welchem Radialschlitz 47 eine Scheibe 49 eingerastet ist; die Scheibe legt sich beim Verstellen der Kolbenstange 42 gegen die kopfseitige Stirnwand 50 des Zylinders 41 und verhindert ein weiteres Verstellen der Kolbenstange. Der Innendurchmesser der Hülse 44 ist etwas größer als der Außendurchmesser des Zylinders 41 und wird über den Zylinder 41 geschoben. Alternativ läßt sich als Anschlag eine in Fig. 5 dargestellte Hubbegrenzungsscheibe 67 gewünschter Länge mit einem Haltering 68 auf der Kolbenstange 42 festlegen und durch die Mutter 48 sowie gegebenenfalls noch durch eine Kontermutter 69 sichern. Am bodenseitigen Ende des Zylinders 41 ist ein Gewindestift 51 angeordnet, auf den ein Gabelkopf 52 mehr oder weniger weit geschraubt und in der gewünschten Endlage durch eine Mutter 53 arretiert ist. Mit dem Gabelkopf 52 läßt sich mittels eines Bolzens 54 ein nicht dargestelltes Zugelement der Rückenlehne eines Sitzes verbinden.

In der in Fig. 1 dargestellten Einbaulage sind der Auslöserkopf 4 und das Hebelgestänge 6 durch den Bowdenzug 2 miteinander verbunden. Der Bowdenzug 2 ist einerseits in die Bohrung 55 eines axialen Wandvorsprunges 56 der Manschette 10 und andererseits in der Bohrung 39 des Basisarmes 32 eingesteckt und mit Sicherungsscheiben gesichert. Mittels einer Stellschraube 57 läßt sich die Länge des Seiles 58 variieren. Die Enden des Seilzuges 58 weisen Klemmtonnen 59 auf, die nach dem Einhaken der Seilenden in die stirnseitigen Schlitze 40 bzw. in die Bohrungen 39, 38 der Hebelarme 28, 32, 36 festgelegt sind.

Das Verstellen der Rückenlehne geschieht durch Eindrücken des Druckknopfes 11, der sich dabei nach innen verschiebt und mit den Führungsnocken 12 in den Schlitzen 13 der Hülse 7 und den Ausnehmungen 14 der Manschette 10 gleitet. Die Druckkraft wird hierbei außermittig über die Nase 29 auf den Hebelarm 27 übertragen und der Hebel 23 um den Stift 25 verschwenkt, so daß über den Hebelarm 28 das Seil 58 des Bowdenzuges 2 nach unten gezogen wird; hierbei verstellt sich der Auslöserarm 36 aus der gestrichelt dargestellten Position in die waagerechte Position. Der Auslöserarm 36 wirkt dann über eine in die Gewindebohrung 38 geschraubte Stellschraube 60 mit einem Druckstück 61 der Gasdruckfeder 5 zusammen; die Gasdruckfeder ist mit einem Gewindezapfen 62 in der Bohrung 37 des Basisarms 32 befestigt. Der Gewindezapfen 62 besitzt einen kleineren Durchmesser als der Gewindeabschnitt 43 der Kolbenstange 42 und ist im Basisarm 32 durch eine Schraube 63 gegen ein Lösen gesichert. Das Druckstück 61 ragt gegenüber dem Basisarm 32 aus der Bohrung 38 vor. Die eingeschraubte Stellschraube 60 kann auch durch einen in Fig. 4 dargestellten festen Bolzen 70 des Auslösehebels 36 ersetzt werden; Maßunterschiede lassen sich durch eine in die Bohrung 39 des Basisarmes 32 eingreifende Stellmutter 71, die mit dem Bowdenzug 58 verbunden ist, ausgleichen. Eine den Abstand zwischen dem Basisarm 32 und dem Auslösehebel 36 überbrückende Feder 72 stützt sich in einer stirnseitigen Aussparung der Stellmutter 71 und einer koaxial mit der Bohrung 39 des Auslösehebels 36 verlaufenden Aussparung 73 ab; die Feder 72 unterstützt das Rückstellen der Kolbenstange 42 der Gasdruckfeder 5.

Bei Kontakt der Stellschraube 60 mit dem Druckstück 61 der Kolbenstange 42 wird die starre Blockierung der Gasfederung aufgehoben, so daß sich die Rückenlehne, solange sie belastet ist, in ihrer Neigung verstellt, da die Kolbenstange 42 in den Zylinder 41 hinein- bzw. aus diesem herausgeschoben wird. Sobald der Druckknopf 11 losgelassen wird, stellt sich unter der Zugkraft des Bowdenzuges 2 der zweiarmige Hebel 23 in seine in Fig. 1 dargestellte Ausgangslage und der Auslösearm 36 des Hebelgestänges 6 in die gestrichelt dargestellte Position, womit der Kontakt mit dem Druckstück 61 über die Stellschraube 60 unterbrochen wird; im selben Moment blockiert die Gasdruckfeder 5 ein weiteres Verstellen der Neigung der Rückenlehne.

Ein leichtes Einpressen des Druckknopfes 11 ergibt sich beim Entriegeln der Blockierung der Gasdruckfeder infolge der zweifachen Teilung der Übersetzung vom Druckknopf bis zur Stellschraube 60 bzw. dem Druckstück 61. Das Hebelverhältnis von 2:1 wird bei einer Einpreßtiefe des Druckknopfes 11 von 10 mm durch die abgestimmten Längen vom Angriffspunkt des Armes 27 mit der Nase 29 am Druckknopf 11 sowie dem Drehpunkt 25 und dem Angriffspunkt des Hebelarmes 28 am Bolzen 59 des Seilzuges sowie dem Drehpunkt 25 bestimmt. Die zweite Übersetzung von 4:1 im Hebelgestänge 6 wird durch die Länge des Schwenkarmes 36 vom Angriffspunkt am Bolzen 59 des Seilzuges 58 sowie dem Drehpunkt 35 und der Länge vom Drehpunkt 35 bis zum Angriffspunkt der Stellschraube 60 bestimmt.

**Patentansprüche**

1. Vorrichtung zum Verstellen und Blockieren insbesondere der Neigung einer Rückenlehne, beispielsweise eines Flugzeug- oder Eisenbahnsitzes, mittels einer beim Drücken eines Knopfes (11) über einen in einer Armlehne (3) des Sitzes angeordneten Seilzug-Auslöser beaufschlagte Kolben-Zylinder-Einheit (5), und einer Kraftumlenkung über einen vom Druckknopf (11) beaufschlagten Hebel (23) sowie einer Übersetzung der Auslösekraft außerhalb der Armlehne über einen an der Kolbenstange (42) der Kolben-Zylinder-Einheit (5) angreifenden, mit dem Hebel (23) des Druckknopfes (11) durch den Seilzug (58) verbundenen Auslösehebel (36), gekennzeichnet durch eine Gasdruckfeder (5) mit starrer Blockierung und eine Übersetzung des Seilzug-Auslösers in der Armlehne (3) über einen außerhalb seiner Mitte die Auslösekraft in den Hebel (23) einleitenden Druckknopf (11).

2. Vorrichtung nach Anspruch 1, dadurch gekennzeichnet, daß das Hebelverhältnis am Druckknopf (11) 2:1 und an der Gasdruckfeder (5) 4:1 beträgt.

3. Vorrichtung nach Anspruch 1 oder 2, dadurch gekennzeichnet, daß der Druckknopf (11) mit einander diametral gegenüberliegenden vorspringenden Führungsnocken (12) in Schlitze (13) einer zylindrischen Abdeckhülse (7) eingreift und die Führungsnocken (12) von innenwandig angeordneten Ausnehmungen (14) einer die Hülse (7) zumindest im Bereich der Schlitze (13) umschließenden Manschette (10) aufgenommen werden.

4. Vorrichtung nach einem oder mehreren der Ansprüche 1 bis 3, dadurch gekennzeichnet, daß die den Druckknopf (11) gleitbeweglich aufnehmende Manschette (10) einen Gewindezapfen (65) aufweist und mit der Abdeckhülse (7) verschraubbar ist.

5. Vorrichtung nach Anspruch 4, gekennzeichnet durch eine zwischen der Abdeckhülse (7) und der Manschette (10) angeordnete Feder (66).

6. Vorrichtung nach einem oder mehreren der Ansprüche 1 bis 5, dadurch gekennzeichnet, daß der schwenkbare Auslösehebel (36) am Druckpunkt mit der Kolbenstange (42) der Gasdruckfeder (5) eine Stellschraube (60) aufweist.

7. Vorrichtung nach einem oder mehreren der Ansprüche 1 bis 6, dadurch gekennzeichnet, daß die Hebel durch einen Bowdenzug (2) verbunden sind.

8. Vorrichtung nach einem oder mehreren der Ansprüche 1 bis 7, gekennzeichnet durch eine auf der Kolbenstange (42) koaxial festlegbare Hubbegrenzungshülse (44), die mit Abstand voneinander angeordnete Radialschlitze (47) für eine darin einrastbare Scheibe (49) aufweist.

9. Vorrichtung nach einem oder mehreren der Ansprüche 1 bis 8, gekennzeichnet durch einen Gewindestift (51) an der der Kolbenstange (42) abgewandten Seite des Zylinders (41) der Gasdruckfeder (5).

10. Vorrichtung nach einem oder mehreren der Ansprüche 1 bis 7 und 9, gekennzeichnet durch auf der Kolbenstange (42) koaxial festlegbare Hubbegrenzungsscheiben (67) mit Haltering (68).

11. Vorrichtung nach einem oder mehreren der Ansprüche 1 bis 5 und 7 bis 10, gekennzeichnet durch einen am Druckpunkt mit der Kolbenstange (42) der Gasdruckfeder (5) angeordneten feststehenden Bolzen (70) des Auslösehebels (36) eines über einen Basisarm (32) mit der Kolbenstange (42) der Gasdruckfeder (5) verschraubten Hebelgestänges (6) und eine federbelastete, in eine Bohrung (39) für den Bowdenzug (2) des Basisarmes (32) eingreifende Stellmutter (71).

**Revendications**

1. Dispositif pour le réglage et le blocage, notamment de l'inclinaison, d'un dossier, par exemple d'un siège d'avion ou de voiture de chemin de fer, au moyen d'une unité (5) à cylindre et piston qui, lorsqu'on appuie sur un bouton (11), est mise en action par l'intermédiaire d'un dispositif de déclenchement par câble monté dans un accoudoir (3) du siège et au moyen d'un dispositif de déviation des forces par l'intermédiaire d'un levier (23) sur lequel agit le bouton poussoir (11) ainsi qu'au moyen d'un dispositif de multiplication de la force de déclenchement situé à l'extérieur de l'accoudoir par l'intermédiaire d'un levier de déclenchement (36) qui agit sur la tige de piston (42) de l'unité (5) à cylindre et piston et est relié au levier (23) du bouton poussoir (11) par le câble de traction (58), caractérisé par un ressort (5) à gaz comprimé permettant un blocage rigide et par une multiplication de l'action du dispositif de déclenchement par câble monté dans l'accoudoir (3) par l'intermédiaire d'un bouton poussoir (11) qui produit la force de déclenchement dans le levier (23) en dehors de son milieu.

2. Dispositif selon la revendication 1, caractérisé en ce que le rapport de levier est de 2:1 au niveau du bouton poussoir (11) et de 4:2 au niveau du ressort à gaz comprimé (5).

3. Dispositif selon l'une des revendications 1 ou 2, caractérisé en ce que le bouton poussoir (11) est en prise avec des cames de guidage (12) qui font saillie à des emplacements diamétralement opposés l'un à l'autre dans la fente (13) d'une enveloppe de couverture cylindrique (7) et que les cames de guidage (12) sont reçues dans des évidements (14) ménagés dans la paroi intérieure d'une manchette (10) qui entoure la douille (7) au moins dans la zone des fentes (13).

4. Dispositif selon une ou plusieurs des revendications 1 à 3, caractérisé en ce que la manchette (10) qui contient le bouton-poussoir (11) qui peut s'y déplacer par glissement comporte un tenon fileté (65) et peut se visser sur la douille de couverture (7).

5. Dispositif selon la revendication 4, caractérisé par un ressort (66) entre la douille (7) et la manchette (10).

6. Dispositif selon une ou plusieurs des revendications 1 à 5, caractérisé en ce que le levier de déclenchement pivotant (36) comporte, au point de pression contre la tige de piston (42) du ressort à gas comprimé (5) une vis de réglage (60).

7. Dispositif selon une ou plusieurs des revendications 1 à 6, caractérisé en ce que les leviers sont reliés par un cordon Bowden (8).

8. Dispositif selon une ou plusieurs des revendications 1 à 7, caractérisé par une douille (44) de limitation de course qui peut être fixée coaxialement sur la tige de piston (42) et qui comporte des fentes radiales (47), situées à une certaine distance les unes des autres, pour un disque (49) qui peut s'y loger.

9. Dispositif selon une ou plusieurs des revendications 1 à 8, caractérisé par une cheville filetée (51) située du côté du cylindre (41) du ressort à gaz comprimé (5) qui est à l'opposé de la tige de piston (42).

10. Dispositif selon une ou plusieurs des revendications 1 à 7, caractérisé par des disques (67) de limitation de course qui peuvent être fixés coaxialement sur la tige de piston (42) et comportent un anneau de maintien (68).

11. Dispositif selon une ou plusieurs des revendications 1 à 5, et 7 à 10, caractérisé par un boulon fixe (70) du levier de déclenchement (36), situé au point de pression contre la tige de piston (42) du ressort à gaz comprimé (5), d'une tringlerie de levier (6) vissée par l'intermédiaire d'un bras de base (32) à la tige de piston (42) du ressort à gaz comprimé (5) et par un écrou de réglage (71) qui est soumis à l'action du ressort et est en prise dans un alésage (39) ménagé pour le cordon Bowden (2) du bras de base (32).

**Claims**

1. A device for adjusting and locking in particular the inclination of the back rest of a seat, for example an aircraft or train seat, in which a piston-cylinder unit (5) is actuated on pushing a button (11) by way of a control cable release device located in an arm rest (3) of the seat, the direction of the force is changed by a lever (23) acted on by the push button (11), and the release force has a transmission outside of the arm rest through a release lever (36) connected to the lever (23) of the push-button (11) by the cable and engaging with the piston rod (42) of the piston-cylinder unit (5), characterised by a pneumatic compression spring (5) having rigid locking means and by transmission of the control cable release device in the arm rest (3) through a push button (11) applying the release force eccentrically to the lever (23).

2. A device according to claim 1, characterised in that the lever ratio at the push button (11) is 2:1 and at the pneumatic compression spring (5) is 4:1.

3. A device according to claim 1 or claim 2, characterised in that the push button (11) engages with diametrically opposed projecting guide cams (12) in slits (13) in a cylindrical cover sleeve (7) and that the guide cams (12) are received in recesses (14) arranged in the inner wall of a collar (10) that surrounds the sleeve (7) at least in the region of the slits (13).

4. A device according to any one or more of claims 1 to 3, characterised in that the collar (10) that slidingly receives the push button (11) has a threaded journal (65) and can be screwed to the cover sleeve (7).

5. A device according to claim 4, characterised by a spring (66) arranged between the cover sleeve (7) and the collar (10).

6. A device according to any one of more of claims 1 to 5, characterised in that the pivotable release lever (36) has a set screw (60) at the point where it acts on the piston rod (42) of the pneumatic compression spring (5).

7. A device according to any one or more of claims 1 to 6, characterised in that the levers are connected by a Bowden cable (2).

8. A device according to any one or more of claims 1 to 7, characterised by a stroke limiting sleeve (44) that can be secured coaxially on the piston rod (42) and has radial slits (47) spaced apart therein for a clip (49) which can be locked therein.

9. A device according to any one or more of claims 1 to 8, characterised by a set screw (51) on the end of the cylinder (41) of the pneumatic compression spring (5) remote from the piston rod (42).

10. A device according to any one or more of claims 1 to 7 and 9, characterised by stroke limiting washers (67) and a retaining ring (68) that can be secured coaxially on the piston rod (42).

11. A device according to any one or more of claims 1 to 5 and 7 to 10, characterised by the release lever (36) of a lever linkage (6) that is screwed to the piston rod (42) of the pneumatic compression spring (5) by way of a base arm (32) having a fixed bolt (70) located at the point where it acts on the piston rod (42) of the pneumatic compression spring (5), and by a spring-loaded adjustment nut (71) that engages in a bore (39) for the Bowden cable (2) of the base arm (32).

FIG. 1

EP 0 208 127 B1

FIG. 2

FIG.3

3

FIG. 4

FIG. 5